# EUROPÄISCHE PATENTANMELDUNG

(11) **EP 2 799 916 A1**
(43) Veröffentlichungstag der Anmeldung: **05.11.2014**
(21) Anmeldenummer: 14166261.9
(22) Anmeldetag: 28.04.2014
(51) Int. Cl.: G02B 5/18, G01C 3/04, G01S 17/00, F41G 3/06, G01S 7/481, G02B 23/10, G02B 27/10, G02B 27/34, G02B 27/42, G02B 5/32

(54) **Fernoptisches Gerät**

(30) Priorität: 29.04.2013 DE 102013207852; 29.04.2013 US 201361816963 P
(71) Anmelder: Carl Zeiss Sports Optics GmbH, 35576 Wetzlar (DE)
(72) Erfinder: Dobschal, Hans-Jürgen, 99510 Kleinromstedt (DE); Schlierbach, Armin, 35638 Leun-Bissenberg (DE); Sinn, Dr. Christian, 35390 Gießen (DE)
(74) Vertreter: Tongbhoyai, Martin

(57) **Zusammenfassung**

Die Erfindung betrifft ein fernoptisches Gerät mit zumindest einem Beobachtungsstrahlengang und mit einer Einrichtung zur Laserentfernungsmessung, welche wenigstens eine Sendeeinrichtung mit einem Sendestrahlengang und wenigstens eine Empfangseinrichtung mit einem Empfangsstrahlengang aufweist, außerdem eine Bildwiedergabeeinheit. Der Sendestrahlengang der Sendeeinrichtung und/oder der Empfangsstrahlengang der Empfangseinrichtung sind über zumindest ein optisches Trägerelement zur Überlagerung mit dem zumindest einen Beobachtungsstrahlengang zusammengeführt. Die Bildwiedergabeeinheit erzeugt das Licht eines einzublendenden Bildes und leitet dieses ebenfalls über das zumindest eine optische Trägerelement zur Überlagerung mit dem zumindest einen Beobachtungsstrahlengang. Zudem ist insbesondere zur Strahlformung und/oder Strahlführung im Sendestrahlengang und/oder im Empfangsstrahlengang wenigstens ein diffraktives optisches Koppelelement am optischen Trägerelement angeordnet.

## Beschreibung

Die Erfindung betrifft ein fernoptisches Gerät mit zumindest einem Beobachtungsstrahlengang und mit einer Einrichtung zur Laserentfernungsmessung gemäß dem Oberbegriff des Anspruchs 1.

Bekannte optische Beobachtungsgeräte mit separaten Laserentfernungsmessoptiken weisen bereits kompakte Gehäuse auf, um die entsprechenden zusätzlichen Strahlengänge unterzubringen. Durch den Einsatz diffraktiver optischer Elemente mit einem geringeren Bauraumbedarf, beispielsweise Beugungsgitter, werden die optischen Systeme an die Gerätegeometrie angepasst.

In der Druckschrift DE 10 2007 007 380 B4 ist ein binokulares Fernglas mit einer Knickbrücke, zwei Beobachtungsstrahlengängen und mit Mitteln zur Laserentfernungsmessung beschrieben. Zur Laserentfernungsmessung sind eine Sendeeinrichtung mit einem Sendestrahlengang und eine Empfangseinrichtung mit einem Empfangsstrahlengang vorhanden, die beide außerhalb der zwei Beobachtungsstrahlengänge angeordnet sind. Dabei sind die Sendeeinrichtung und die Empfangseinrichtung jeweils in getrennten Gehäuseteilen des Fernglases separat von den zwei Beobachtungsstrahlengängen untergebracht. Die Sendeeinrichtung und Empfangseinrichtung sind im Bereich einer Mittenachse der Knickbrücke angeordnet und dadurch relativ zueinander bewegbar. Zur Strahlformung ist wenigstens ein diffraktives optisches Element vorhanden.

Auch ist aus der Druckschrift DE 10 2008 059 892 A1 eine Vorrichtung zur Einblendung eines Bildes in den Strahlengang einer Zieloptik bekannt. In dem Strahlengang der Zieloptik ist hierzu ein wenigstens teilweise lichtdurchlässiges optisches Trägerelement mit einem diffraktiven optischen Einkoppel- und Auskoppelelement angeordnet.

Aufgabe der Erfindung ist es, ein fernoptisches Gerät in seiner Kompaktheit und Leistungsfähigkeit weiterzuentwickeln.

Erfindungsgemäß wird diese Aufgabe mit den in Anspruch 1 genannten Merkmalen gelöst. Die weiteren rückbezogenen Ansprüche betreffen vorteilhafte Aus- und Weiterbildungen der Erfindung.

Die Erfindung schließt ein fernoptisches Gerät mit zumindest einem Beobachtungsstrahlengang und mit einer Einrichtung zur Laserentfernungsmessung ein, welche wenigstens eine Sendeeinrichtung mit einem Sendestrahlengang und wenigstens eine Empfangseinrichtung mit einem Empfangsstrahlengang aufweist, außerdem eine Bildwiedergabeeinheit. Der Sendestrahlengang der Sendeeinrichtung und/oder der Empfangsstrahlengang der Empfangseinrichtung sind über zumindest ein optisches Trägerelement zur Überlagerung mit dem zumindest einen Beobachtungsstrahlengang zusammengeführt. Die Bildwiedergabeeinheit erzeugt das Licht eines einzublendenden Bildes und leitet dieses ebenfalls über das zumindest eine optische Trägerelement zur Überlagerung mit dem zumindest einen Beobachtungsstrahlengang. Zudem ist, insbesondere zur Strahlformung und/oder Strahlführung, im Sendestrahlengang und/oder im Empfangsstrahlengang wenigstens ein diffraktives optisches Koppelelement am optischen Trägerelement angeordnet.

Die Erfindung geht dabei von der Überlegung aus, dass als Mittel der Einrichtung zur Laserentfernungsmessung geeignete diffraktive optische Koppelelemente sowohl zur Auskopplung wie auch zur Strahlformung der stark astigmatischen Emission eines Halbleiterlasers, der eine Laserfacette als leuchtende Fläche aufweisen kann, im Zusammenhang mit dem sendenden Objektiv eingesetzt werden. Derartige Koppelelemente können zudem zur Wellenlängenselektion oder zur Strahlteilung dienen. Ebenso werden die Koppelelemente zur Sammlung des aus einer Szene zurückgestreuten IR-Laserlichtes mittels des empfangenden Objektivs, wie auch zur Wiedergabe des Displays zur Anzeige einer Entfernung eines Objekts im Sehfeld eines Anwenders eingesetzt.

Der Lichttransport im Trägerelement erfolgt durch interne Totalreflexion. Um diese Lichtwege durch das Display oder den IR-Laser anzuregen, kann es notwendig sein, Transmissions- oder Reflexionsgitter vorzusehen, welche zusätzlich zur Abbildung bzw. Strahlformung eingesetzt werden können. Prinzipiell ist die Ein- und Auskopplung funktional unabhängig voneinander.

Ein besonderer Vorteil der Erfindung ist die kostengünstig realisierbare Lösung, die auf abbildenden diffraktiven Strukturen beruht. Dadurch wird ein fernoptisches Gerät in seiner Kompaktheit und Leistungsfähigkeit wesentlich weiterentwickelt.

In bevorzugter Ausgestaltung der Erfindung kann das wenigstens eine diffraktive optische Koppelelement als Transmissionsgitter oder Reflexionsgitter ausgeführt sein. Das einzukoppelnde Licht gelangt durch Beugung in das optische Trägerelement, in dem es im weiteren Verlauf bis zur Auskoppelstelle totalrefiektiert wird. Bei komplexeren Aufbauten können beide Gittertypen miteinander kombiniert werden, je nach Verwendungszweck.

Vorteilhafterweise kann das optische Trägerelement eine vorzugsweise aus Glas gebildete Planplatte sein. Zwischen den Seitenflächen der Planplatte kann das Licht durch Totalreflexion weitergeführt werden. An die Glasplatte sind die weiteren diffraktiven optischen Koppelelemente handwerklich gut anbindbar.

In bevorzugter Ausgestaltung kann das wenigstens eine diffraktive optische Koppelelement als holographisch hergestelltes optisches Element (HOE) ausgeführt sein, beispielsweise als Sinusgitter oder Hologramm. Derartige Koppelelemente sind in Bezug auf ihre Koppeleffizienz besonders leistungsfähig und im Vergleich zu binären Beugungsstrukturen preisgünstiger herstellbar.

Des Weiteren kann in bevorzugter Ausgestaltung das optische Trägerelement 0,5 bis 3 mm, besonders bevorzugt 1 bis 2 mm außerhalb einer Zwischenbildebene angeordnet sein. Das Trägerelement muss sich deshalb nicht in einer Zwischenbildebene befinden, da die dann zusätzlich notwendige Brechkraft, die mit der Entfernung von der Zwischenbildebene zunimmt, durch das jeweilige abbildende diffraktive Element hervorgerufen werden kann.

Zudem kann vorteilhafterweise das wenigstens eine diffraktive optische Koppelelement zur Abbildung und Strahlformung eingesetzt sein; beispielsweise kann ein zylinderförmiges Laserstrahlenbündel in einen kreisförmigen Querschnitt überführt werden. Diffraktive optische Elemente ermöglichen hierbei Lösungen, die mit refraktiven Methoden nur schwer oder gar nicht zu realisieren sind, beispielsweise linien- oder kreisförmige Beleuchtungen.

Bevorzugt kann wenigstens ein diffraktives optisches Koppelelement für den Sendestrahlengang als kreisring- oder offen quadratisches Reflexionsgitter ausgebildet sein, welches im Bereich der optischen Achse im Beobachtungsstrahlengang am optischen Trägerelement angeordnet ist.

Des Weiteren bevorzugt kann das kreisringförmige optische Koppelelement als Zielmarke dienen. Diese Strukturierung wäre insbesondere deswegen attraktiv, weil wegen der miteinander gekoppelten Funktionalität die Justage der Zielmarke auf den Lichtweg des IR-Sendelasers im Sendestrahlengang parallel zur optischen Achse entfällt.

In bevorzugter Ausgestaltung der Erfindung kann das optische Trägerelement als Strahlteiler mit zwei Prismen ausgeführt sein, zwischen denen ein diffraktives optisches Koppelelement zum Einkoppeln angeordnet ist. Besonders bevorzugt ist hierbei ein Volumenhologramm, welches in eine ausgedehnte Polymerschicht zwischen die zwei Prismen eingebracht ist, die typischerweise 0,1 bis 1 mm dick ausgeprägt ist. Die beschriebene Einkopplung macht eine Balance zwischen den Beugungseffizienzen für die Lichtwege im Empfangsstrahlengang und im Beobachtungsstrahlengang erforderlich, letztere in die nullte Beugungsordnung. Die Balancierung ist notwendig, da einerseits jedes vom Halbleiterlaser emittierte IR-Photon für die Laserentfernungsmessung benötigt wird bzw. jedes fehlende Photon die Reichweite der Entfernungsmessung verringert. Andererseits ist zu beachten, dass eine möglichst geringe Beeinträchtigung des Beobachtungsstrahlengangs erfolgt. Diese Balancierung wird durch Einsatz eines Volumenhologramms erleichtert. In diesem Fall können auch zwei Prismen aus demselben Material verwendet werden.

Alternativ kann vorteilhafterweise das diffraktive optische Koppelelement in eines der

Prismen strukturiert und mit dem anderen Prisma verkittet sein. In diesem Fall ist das Optikdesign des diffraktiven optischen Koppelelements aufgrund des geringeren Brechungsindexunterschiedes allerdings stärker angespannt, beispielsweise durch stärker beugende Strukturen, was die angesprochene Balancierung erschwert.

In bevorzugter Ausführungsform kann das optische Koppelelement im Strahlteiler vollflächig ausgebildet sein. Eine vollflächige Einkopplung unterstützt die erforderliche Balance zwischen den Beugungseffizienzen für die Lichtwege im Empfangsstrahlengang und im Beobachtungsstrahlengang, da eine mögliche Verringerung der Transmission der Anwender aufgrund fehlender starker Kontrastunterschiede nicht bemerkt.

Des Weiteren kann in bevorzugter Ausgestaltung der Erfindung die wenigstens eine Empfangseinrichtung eine Avalanche-Photodiode aufweisen. Derartige Photodioden sind besonders dazu geeignet, geringste Lichtintensitäten bis hinunter zu einzelnen Photonen zu detektieren.

Vorteilhafterweise kann das optische Koppelelement im Strahlteiler eine Abbildungsfunktion enthalten, die eine Fokussierung des abgelenkten Laserlichtes auf die Avalanche-Photodiode bewirkt.

In bevorzugter Ausgestaltung kann das fernoptische Gerät als binokulares Fernglas mit zwei Beobachtungsstrahlengängen ausgebildet sein. In jedem der Beobachtungsstrahlengänge kann die gesamte oder auch nur ein Teil der Messeinrichtung zur Laserentfernungsmessung, umfassend Sender, Empfänger und Display, eingebaut sein.

Alternativ kann das fernoptische Gerät als Zielfernrohr mit einem Beobachtungsstrahlengang ausgebildet sein. Hier ist die gesamte Messeinrichtung zur Laserentfernungsmessung in Verbindung mit dem einzigen zur Verfügung stehenden Beobachtungsstrahlengang untergebracht.

Weitere vorteilhafte Weiterbildungen und Ausgestaltungen der Erfindung ergeben sich aus den nachfolgend anhand der Zeichnungen prinzipmäßig beschriebenen Ausführungsbeispielen.

Es zeigen:
- Fig. 1: schematischer Strahlengang in einem Kanal des fernoptischen Geräts;
- Fig. 2: schematisch die Lichtauskopplung;
- Fig. 2a: Vorderansicht des zugehörigen optischen Trägerelements zu Fig. 2;
- Fig. 3: schematisch die Einkopplung von Laserlicht;
- Fig. 3a: Vorderansicht des zugehörigen optischen Trägerelements zu Fig. 3;
- Fig. 4: schematisch die Einkopplung von Laserlicht in Kombination mit einer Bildwiedergabeeinheit;
- Fig. 4a: Vorderansicht des zugehörigen optischen Trägerelements zu Figur 4;
- Fig. 5: schematisch ein Zielfernrohr als fernoptisches Gerät; und
- Fig. 6: schematisch ein binokulares Fernglas als fernoptisches Gerät.

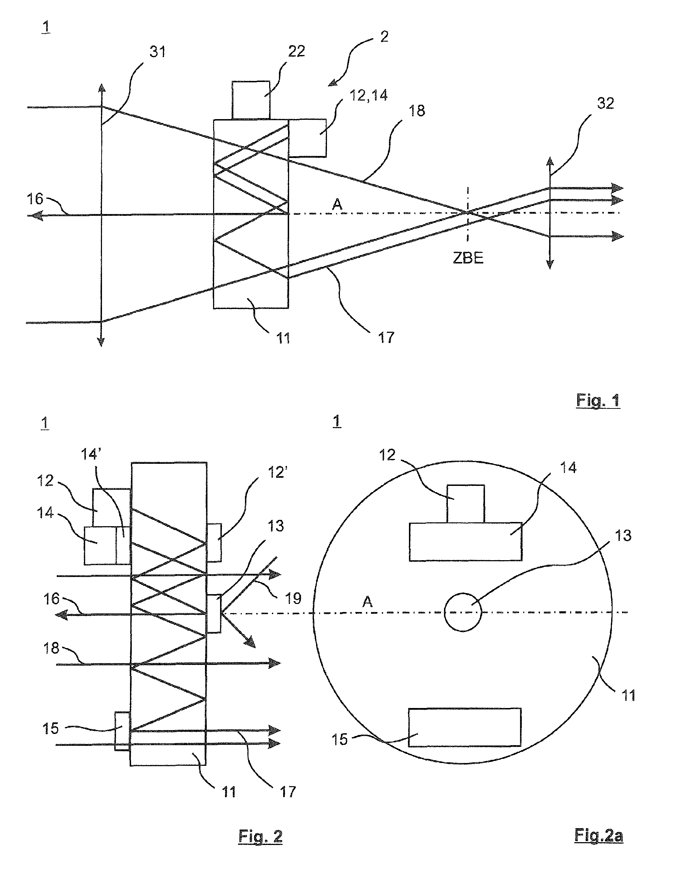

Figur 1 zeigt schematisch den Weg aller relevanten Strahlen in einem Kanal des fernoptischen Geräts 1. Ein Doppelfernrohr weist zwei solcher Kanäle auf, ein Zielfernrohr lediglich einen Kanal. Die Mittelt zur Laserentfernungsmessung 2 sind außerhalb einer Zwischenbildebene angeordnet. Die in der Figur 1 noch nicht weiter dargestellten Koppelelemente für den Sendestrahlengang 16 und den Bildwiedergabestrahlengang 17 können als abbildende diffraktive optische Koppelelemente ausgebildet sein. Einerseits befindet sich am optischen Trägerelement 11 ein IR-Laser als Sendeeinrichtung 12 und eine Bildwiedergabeeinheit 14, andererseits eine Avalanche-Photodiode als Empfangseinrichtung 22. Das optische Trägerelement 11 ist als planparallele Glasplatte ausgeführt. Das Objektiv 31 bildet ein Objekt im Unendlichen in die Zwischenbildebene ZBE ab, in der es mit dem Okular 32 vom Nutzer beobachtet wird. Das Objektiv 31 kann eine Fokussiervorrichtung enthalten, die ein Objekt in endlicher Objektentfernung scharf in die Zwischenbildebene ZBE abbildet und gleichzeitig den Sendestrahlengang in die Objektentfernung fokussiert. Der Übersichtlichkeit halber ist in Figur 1 von den Strahlenbündeln, die aus dem Gerät auskoppeln, nur jeweils ein Einzelstrahl als Repräsentant für den IR-Sendestrahlengang 16 und den Bildwiedergabestrahlengang 17 gezeichnet. Die Strahlen, die in das Gerät einkoppeln und die Avalanche-Photodiode 22 erreichen, sind nicht gezeichnet. Die optische Achse des ausgekoppelten Lasers verläuft parallel zur optischen Achse A des Beobachtungsstrahlengangs 18. In dieser Figur wie in den folgenden Figuren sind die Strahlengänge schematisch zu verstehen und können beispielhaft sein.

Figur 2 zeigt die Lichtauskopplung im fernoptischen Gerät 1 sowie in Figur 2a die Vorderansicht des zugehörigen optischen Trägerelements 11 zu Figur 2. Auf dem als Glasplatte ausgebildeten optischen Trägerelement 11 befinden sich der Laser zur Entfernungsmessung als Sendeeinrichtung 12 sowie das Display zur Entfernungsanzeige als Bildwiedergabeeinheit 14. Wenn die Glasplatte sich nicht in der Zwischenbildebene ZBE befindet, kann als diffraktives optisches Koppelelement ein Transmissionsgitter 14' vor der Bildwiedergabeeinheit 14 angeordnet sein. So kann eine Abbildung erzeugt werden, die zusammen mit dem in der Figur 2 nicht dargestellten rechts folgenden Okular das Display der Bildwiedergabeeinheit 14 nach Unendlich abbildet. Das Reflexionsgitter als Auskoppelelement 15 für den Bildwiedergabestrahlengang kann diese Abbildung weiter unterstützen. Alle diffraktiven Koppelelemente, mit Ausnahme von dem Transmissionsgitter 14', sind hier und in den folgenden Abbildungen als Reflexionsgitter gezeichnet. Bei Anpassung des Strahlenverlaufs ist dieselbe Funktion auch durch Transmissionsgitter zu erreichen. Die Anwendung entscheidet, ob ein undurchsichtiges Reflexions- oder ein durchsichtiges Transmissionsgitter Verwendung findet.

Der Lichtweg im Sendestrahlengang 16 für den IR-Sendelaser 12 funktioniert ganz analog zum soeben beschriebenen Bildwiedergabestrahlengang, nur dass die leuchtende Laserfacette durch das Objektiv 31 nach Unendlich abgebildet wird. Die üblicherweise verwendeten Laserdioden zeigen ein ausgeprägt elliptisches Strahlprofil mit in zueinander senkrechten Richtungen stark unterschiedlichen Divergenzwinkeln. Auch dieser (doppelte) Astigmatismus lässt sich durch geeignete Auslegung des Reflexionsgitters als Koppelelement 12' und des Reflexionsgitters als Auskoppelelement 13 für den Sendestrahlengang 16 hinter dem IR-Sendelaser 12 verringern oder sogar beseitigen. Außerdem lässt sich auf diesem Wege die benötigte zusätzliche Brechkraft erzeugen, für den Fall, dass sich das optische Trägerelement 11 nicht in der Zwischenbildebene befindet. Für die angesprochene Astigmatismuskorrektur ist ein Reflexionsgitter, wie abgebildet, gegenüber einem Transmissionsgitter zu bevorzugen, da der größere Abstand zur Lichtquelle die Korrektur erleichtert.

Die Reflexionsgitter 12' und 13 als Koppelelemente werden zur Erzielung der Reflexionswirkung vorzugsweise mit Chrom oder einem anderen Metall belegt, welches dann in zwei Richtungen als Spiegel wirken kann. Das skizzierte Reflexionsgitter als Auskoppelelement 13 für den Sendestrahlengang 16 weist daher eine zusätzliche vorteilhafte Eigenschaft auf. Vorausgesetzt, die Justage des Lasers zur Glasplatte erfolgt beispielsweise bei einem Zielfernrohr so, dass die optische Achse des ausgekoppelten Lasers parallel zur optischen Achse der Zieloptik liegt, dann stellt das Reflexionsgitter 13 eine Zielmarke dar, die durch einfache Maßnahmen auch beleuchtet dargestellt werden kann. Dies soll schematisch durch den Beleuchtungsstrahlengang 19 angedeutet werden, welcher durch eine schräge Beleuchtung mit einer nicht in der Figur 2 dargestellten Leuchtdiode von der Rückseite her realisiert werden könnte.

Ist die Effizienz der Auskopplung des Lasers nachrangig, lässt sich die durch das Reflexionsgitter 13 gebildete Zielmarke auch strukturieren, beispielsweise in Form eines Kreisrings oder eines offenen Quadrats.

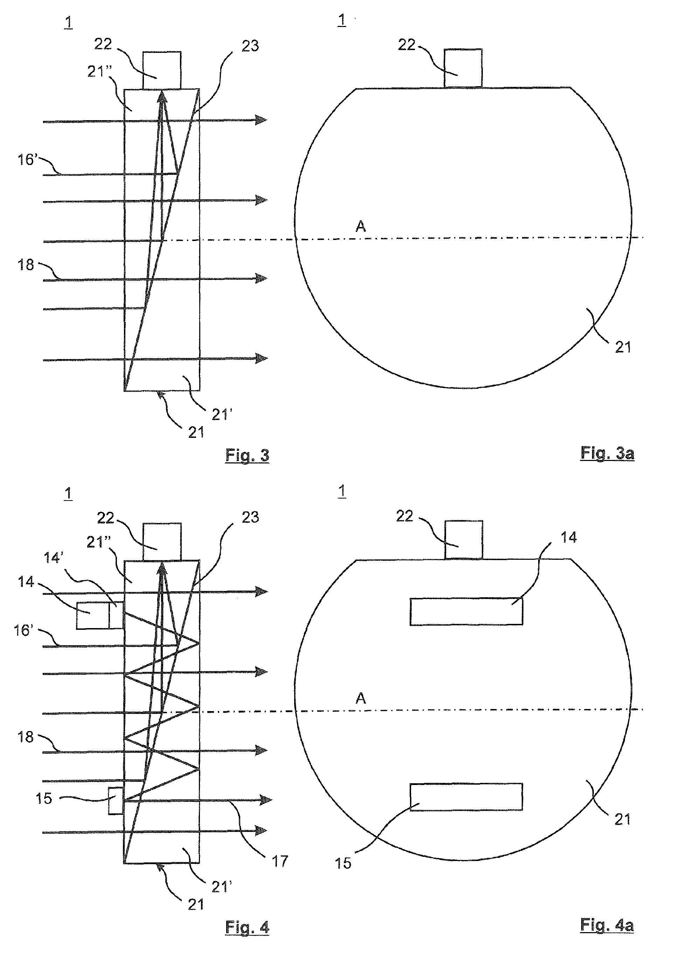

Figur 3 zeigt schematisch die Einkopplung von Laserlicht in ein fernoptisches Gerät 1 sowie in Figur 3a die Vorderansicht des zugehörigen optischen Trägerelements 21 zu Figur 3. Das optische Trägerelement 21 ist wie ein Strahlteiler ausgelegt, der aus einem ersten Prisma 21' mit niedrigem Brechungsindex und einem zweiten Prisma 21' mit hohem Brechungsindex besteht. Zwischen den Prismen 21' 21" befindet sich im Strahlteiler ein optisches Koppelelement 23 (hier vollflächig gedacht), welches die einfallenden IR-Photonen im Empfangsstrahlengang 16' in einem geeigneten Winkel ablenkt. Außerdem enthält dieses diffraktive optische Koppelelement 23 eine Abbildungsfunktion, die zu einer Fokussierung des abgelenkten IR-Lichtes auf die Avalanche-Photodiode 22 führt. Diese Vorgehensweise erhöht die Effizienz der Detektion. Vorteilhaft an dieser Anordnung ist weiterhin, dass die Avalanche-Photodiode 22 bevorzugt oder ausschließlich am Gitter gebeugte IR-Photonen registriert, ohne mit störenden Photonen aus dem sichtbaren Spektralbereich belastet zu werden, da diese nach dem Brechungsgesetz abgelenkt und auch nicht fokussiert werden und damit die Avalanche-Photodiode 22 verfehlen.

Vorteilhaft ist weiterhin das Fehlen einer sonst üblichen dichroitischen Strahlteilerschicht, die auf die Seitenflächen eines der Prismen 21', 21" aufgedampft wäre. Dieser Strahlteiler wäre aufgrund seines von Null Grad abweichenden Einfallswinkels polarisationssensitiv, was seine Auslegung erheblich erschweren und damit zu einer aufwändigen und teuren Beschichtung führen würde. Zusätzlich kann das Gitter so ausgelegt werden, dass für den Beobachtungsstrahlengang 18 keine unerwünschte Transmissionsminderung oder Verfärbung eintritt, was mit einem dichroitischen Strahlteiler nur eingeschränkt möglich wäre.

Der Strahlengang von Figur 3 zeigt schematisch den besonders bevorzugten und oben angesprochenen Fall, dass die Prismen 21' und 21" aus demselben Material bestehen. In diesem Fall ist das diffraktive Koppelelement als Volumenhologramm in einer in Figur 3 nicht weiter dargestellten ausgedehnten Polymerschicht zu denken, die gleichzeitig als optischer Kitt fungiert. Wie oben bereits erwähnt, lässt sich diese Funktionalität unter Inkaufnahme gewisser Nachteile auch mit unterschiedlichen Prismenmaterialien erreichen.

Figur 4 zeigt schematisch die Einkopplung von Laserlicht in Kombination mit einer Bildwiedergabeeinheit in einem fernoptischen Gerät 1 sowie in Figur 4a die Vorderansicht des zugehörigen optischen Trägerelements 21 zu Figur 4. Hier ist das optische Trägerelement 21 wiederum wie ein Strahlteiler ausgelegt, der aus einem ersten Prisma 21' mit niedrigem Brechungsindex und einem zweiten Prisma 21" mit hohem Brechungsindex besteht. Zwischen den Prismen 21', 21" befindet sich im Strahlteiler wiederum ein optisches Koppelelemente 23, welches die einfallenden IR-Photonen im Empfangsstrahlengang 16' in einen geeigneten Winkel in Richtung der Avalanche-Photodiode 22 ablenkt. Folglich ist analog zu den Gegebenheiten in Figur 3 die Anordnung nun in Figur 4 und Figur 4a um ein Display zur Entfernungsanzeige als Bildwiedergabeeinheit 14 ergänzt. Wenn das optische Trägerelement 21 sich nicht in der Zwischenbildebene befindet, ist als diffraktives optisches Koppelelement ein Transmissionsgitter 14' vor der Bildwiedergabeeinheit 14 zur Abbildung angeordnet. Das Reflexionsgitter als Auskoppelelement 15 für den Bildwiedergabestrahlengang 17 kann diese Abbildung wiederum weiter unterstützen. Figur 4 beinhaltet alle Möglichkeiten, die in den Figuren 2 und 3 bereits besprochen wurden und ist gedacht zur Erläuterung, dass sich die Prinzipien der Aus- (Figur 2) und Einkopplung (Figur 3) mittels einer komplexeren Trägerplatte kombinieren lassen.

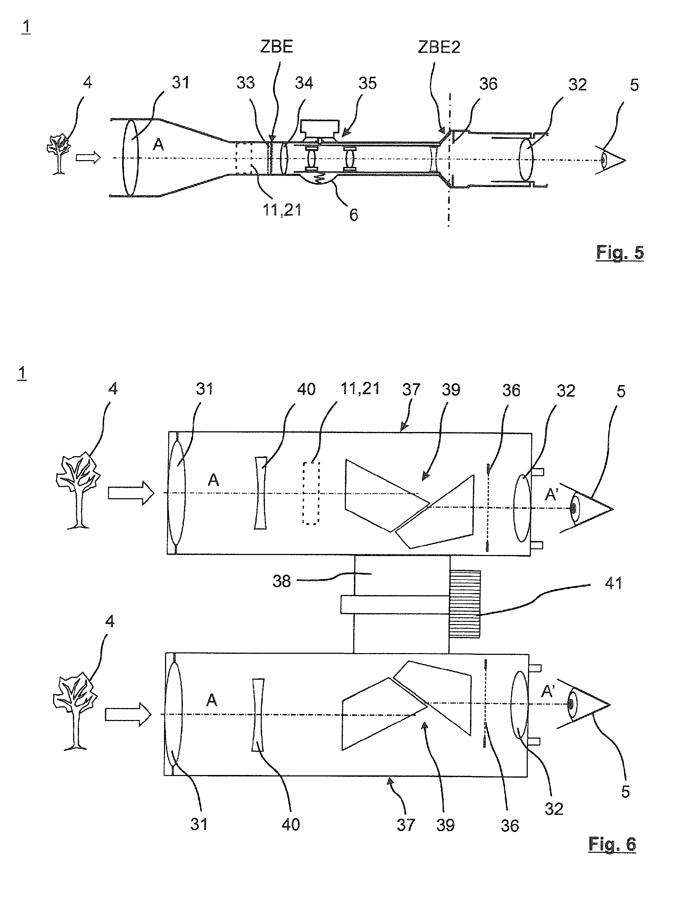

Figur 5 zeigt schematisch ein Zielfernrohr als fernoptisches Gerät 1. Dieses umfasst ein Rohr, das stückweise verschiedene Durchmesser aufweist und ein optisches System enthält. Das optische System besteht zumindest aus dem in der Figur 5 eingezeichneten Objektiv 31, einem Linsenumkehrsystem mit Zoomgliedern 35 einer Feldlinse 34, einem Absehen 33 und einem Okular 32. In einem vorderen, meistens verdickten Bereich befindet sich das Objektiv 31. Das Objektiv 31 kann auch aus mehreren, in der Figur 5 nicht im Detail dargestellten, einzelnen Linsen oder Kittgliedern aufgebaut sein. Das Objektiv 31 erzeugt ein reelles, relativ zum betrachteten Objekt 4 auf dem Kopf stehendes Bild in einer zum Objekt 4 konjugierten ersten Bildebene, der Zwischenbildebene ZBE. Im vorliegenden Ausführungsbeispiel ist das Absehen 33 im Bereich der Zwischenbildebene ZBE angeordnet. In einem oft als Mittelrohr bezeichneten mittleren Bereich befindet sich das Linsenumkehrsystem mit Zoomgliedern 35 als verstellbare optische Elemente. Dort kann sich auch wenigstens ein äußerer Verstellturm 6 befinden, mit welchem sich die optischen Eigenschaften des optischen Systems bzw. eine durch das Absehen 33 definierte Ziellinie verändern lassen. Durch das Linsenumkehrsystem wird das auf dem Kopf stehende Bild aufgerichtet und in einer neuen Bildebene, der zweiten Bildebene, mit einem bestimmten Abbildungsmaßstab abgebildet. Das Absehen 33 kann in einem weiteren nicht dargestellten Ausführungsbeispiel auch im Bereich einer zweiten Bildebene bzw. Zwischenbildebene ZBE2 angeordnet sein. Wenn das Linsenumkehrsystem mindestens zwei axial verschiebbare Zoomglieder 35 enthält, erfüllen diese auch die Aufgabe, die Gesamtvergrößerung des vom Benutzer wahrgenommenen Bildes in einem mechanisch begrenzten Bereich stufenlos wählbar zu machen. In einem hinteren, meist verdickten Bereich ist das Okular 32 angeordnet. Zum Zwecke der Fokussierung eines durch das Zielfernrohr betrachteten Objekts 4 oder zur Anpassung an die Fehlsichtigkeit des Benutzers kann das Okular 32 axial verschoben werden.

Im Bereich der ersten Bildebene ZBE kann das gestrichelt angedeutete optische Trägerelement 11, 21 mit den in der Figur 5 der Übersichtlichkeit halber nicht im Detail dargestellten weiteren Einrichtungen zur Laserentfernungsmessung, der Sendeeinrichtungen und der Empfangs-/Wiedergabeeinrichtungen angeordnet sein.

Das Okular 32 bildet das Bild der zweiten Bildebene in eine beliebige Entfernung ab oder dient dazu, auf das Absehen 33 scharfzustellen. Eine Sehfeldblende 36 nahe der zweiten Bildebene ZBE2 ist, je nach Vergrößerungseinstellung, begrenzend für das subjektiv wahrgenommene Sehfeld. Ein Zielfernrohr kann darüber hinaus weitere, in der Figur 5 nicht dargestellte, optische Komponenten enthalten, wie beispielsweise eine Absehenbeleuchtung, eine Strahleinkopplung oder -auskopplung für eine Entfernungsmessung oder Einrichtungen für fotografische Aufnahmen. Ebenso können elektronische Komponenten, Sensoren, Bedienelemente oder Energiespeicher vorhanden sein, die für die genannten Zwecke nötig sind.

In den Figuren 5 und 6 sind funktionsgleiche Elemente mit denselben Bezugszeichen versehen.

Figur 6 zeigt schematisch ein binokulares Fernglas als fernoptisches Gerät 1, welches zwei parallel zueinander angeordnete Tuben 37 aufweist, die jeweils ein optisches System enthalten. Die Tuben 37 sind vorliegend über mindestens eine zweiteilige Brücke 38 mit einer Mittenachse miteinander verbunden. Alternativ können sie fest zueinander in einem gemeinsamen Gehäuse angeordnet sein (nicht gezeigt). Der Augenabstand eines Benutzers kann bei Vorhandensein der mindestens einen zweiteiligen Brücke 38 durch eine entsprechende Knickung berücksichtigt werden. Im Falle eines gemeinsamen Gehäuses kann der Augenabstand des Benutzers beispielsweise mittels rhombischer Prismen eingestellt werden. Das optische System besteht aus mindestens einem Objektiv 31, einem Prismensystem 39, einer Sehfeldblende 36 und einem Okular 32. Durch das Objektiv 31 und durch das Okular 32 wird jeweils eine optische Achse A, A' festgelegt (siehe Figur 5). Das Objektiv 31 kann aus mehreren einzelnen Linsen oder Kittgliedern bestehen. Zur Fokussierung eines durch das binokulare Fernglas betrachteten Objekts 4 kann entweder das Okular 32 oder das komplette Objektiv 31 axial verschoben werden. Ebenso kann eine Linsengruppe, welche in der Regel zwischen dem Objektiv 31 und dem Prismensystem 39 angeordnet ist und als Fokussierlinse 40 bezeichnet wird, verschoben werden. Zum Fokussieren kann ein Drehknopf 41 auf der Mittelachse angeordnet sein, mit dem die Fokussierlinsen 40 gemeinsam axial verschoben werden können. Im Bereich zwischen der Fokussierlinse 40 und dem Prismensystem 39 ist das optische Trägerelement 11, 21 zumindest in einem der beiden Tuben 37 mit den in der Figur 6 wiederum der Übersichtlichkeit halber nicht im Detail dargestellten weiteren Einrichtungen zur Laserentfernungsmessung, der Sendeeinrichtungen und der Empfangs-/Wiedergabeeinrichtungen angeordnet.

Das Objektiv 31 erzeugt ein reelles, relativ zum betrachteten Objekt 4 auf dem Kopf stehendes Bild in einer dem Objektiv 31 zugeordneten Bildebene. Zur Bildaufrichtung kann das Prismensystem 39 nach Abbe-König, Schmidt-Pechan, Uppendahl, Porro oder einer anderen Prismensystemvariante aufgebaut sein. Durch das Prismensystem 39 wird das auf dem Kopf stehende Bild wieder aufgerichtet und in einer Zwischenbildebene abgebildet. In der Zwischenbildebene befindet sich eine das Sehfeld scharf begrenzende Sehfeldblende 36.

Das Okular 32 dient dazu, das Bild der Zwischenbildebene in eine beliebige Entfernung, beispielsweise ins Unendliche oder in einem Meter scheinbare Entfernung, abzubilden. Eine durch den Pfeil in Figur 6 angedeutete Strahlrichtung wird durch die Reihenfolge Objekt 4 - Objektiv 31 - Prismensystem 39 - Okular 32 - Auge 5 definiert. Die Sehfeldblende 36 kann entweder durch eine Fassung eines optischen Elements gebildet sein oder durch eine separate Blende definiert sein. Sie kann durch das in Strahlrichtung nachfolgende restliche optische System in eine Ebene abgebildet werden, die in Strahlrichtung hinter dem Okular 32 liegt und typischerweise 5 bis 25 mm Abstand zu diesem hat.

Ein binokulares Fernglas kann darüber hinaus weitere optische Komponenten enthalten, die beispielsweise einer Bildstabilisierung, einer Strahlein- oder -auskopplung oder fotografischen Zwecken dienen. Ebenso können elektronische Komponenten, Bedienelemente oder Energiespeicher vorhanden sein, die für die genannten Zwecke nötig sind. Meistens seitlich am binokularen Fernglas können sich Haltevorrichtungen befinden, an denen beispielsweise ein Gurt zum Tragen befestigt werden kann.

### Bezugszeichenliste:

- 1: Fernoptisches Gerät
- 2: Einrichtung zur Laserentfernungsmessung
- 4: Objekt
- 5: Auge
- 6: Verstellturm
- 11: optisches Trägerelement, Glasplatte
- 12: Sendeeinrichtung, IR-Sendelaser
- 12': Reflexionsgitter als Koppelelement
- 13: Auskoppelelement für Sendestrahlengang, Reflexionsgitter
- 14: Bildwiedergabeeinheit
- 14': Transmissionsgitter als Koppelelement
- 15: Auskoppelelement für Bildwiedergabestrahlengang, Reflexionsgitter
- 16: Sendestrahlengang
- 16': Empfangsstrahlengang
- 17: Bildwiedergabestrahlengang
- 18: Beobachtungsstrahlengang
- 19: Lichtweg Beleuchtungsstrahlengang
- 21: optisches Trägerelement aus zwei Prismen
- 21': erstes Prisma
- 21": zweites Prisma
- 22: Empfangseinrichtung, Avalanche-Photodiode
- 23: Optisches Koppelelement im Strahlteiler
- 31: Objektiv
- 32: Okular
- 33: Absehen
- 34: Feldlinse
- 35: Zoomglieder
- 36: Sehfeldblende
- 37: Tubus
- 38: Brücke
- 39: Prismensystem
- 40: Fokussierlinse
- 41: Drehknopf
- A, A': Optische Achsen
- ZBE: Zwischenbildebene, erste Bildebene
- ZBE2: zweite Bildebene

## Patentansprüche

1. Fernoptisches Gerät (1) mit zumindest einem Beobachtungsstrahlengang (18) und mit einer Einrichtung zur Laserentfernungsmessung (2), welche wenigstens eine Sendeeinrichtung (12) mit einem Sendestrahlengang (16) und wenigstens eine Empfangseinrichtung (22) mit einem Empfangsstrahlengang (16') aufweist, außerdem eine Bildwiedergabeeinheit (14), **dadurch gekennzeichnet,**
- **dass** der Sendestrahlengang (16) der Sendeeinrichtung (12) und/oder der Empfangsstrahlengang (16 ') der Empfangseinrichtung (22) über zumindest ein optisches Trägerelement (11, 21) zur Überlagerung mit dem zumindest einen Beobachtungsstrahlengang (18) zusammengeführt sind,
- **dass** die Bildwiedergabeeinheit (14) das Licht eines einzublendenden Bildes erzeugt und dieses ebenfalls über das zumindest eine optische Trägerelement (11, 21) zur Überlagerung mit dem zumindest einen Beobachtungsstrahlengang (18) leitet und,
- **dass**, insbesondere zur Strahlformung und/oder Strahlführung, im Sendestrahlengang (16) und/oder im Empfangsstrahlengang (16') wenigstens ein diffraktives optisches Koppelelement (12', 13, 14', 15, 23) am optischen Trägerelement (11, 21) angeordnet ist.

2. Fernoptisches Gerät (1) nach Anspruch 1, **dadurch gekennzeichnet, dass** das wenigstens eine diffraktive optische Koppelelement (12', 13, 14', 15, 23) als Transmissionsgitter (14') oder Reflexionsgitter (12', 13, 15, 23) ausgeführt ist.

3. Fernoptisches Gerät (1) nach Anspruch 1 oder 2, **dadurch gekennzeichnet, dass** das optische Trägerelement (11) eine vorzugsweise aus Glas gebildete Planplatte ist.

4. Fernoptisches Gerät (1) nach einem der Ansprüche 1 bis 3, **dadurch gekennzeichnet, dass** das wenigstens eine diffraktive optische Koppelelement (12', 13, 14`, 15, 23) als holographisch hergestelltes optisches Element ausgeführt ist.

5. Fernoptisches Gerät (1) nach einem der Ansprüche 1 bis 4, **dadurch gekennzeichnet, dass** das optische Trägerelement (11, 21) 0,5 bis 3 mm außerhalb einer Zwischenbildebene angeordnet ist.

6. Fernoptisches Gerät (1) nach einem der Ansprüche 1 bis 5, **dadurch gekennzeichnet, dass** das wenigstens eine diffraktive optische Koppelelement (12', 13, 14', 15, 23) zur Abbildung und Strahlformung eingesetzt ist.

7. Fernoptisches Gerät (1) nach einem der Ansprüche 1 bis 6, **dadurch gekennzeichnet, dass** wenigstens ein diffraktives optisches Koppelelement (13) für den Sendestrahlengang (16) als kreisring- oder offen quadratisches Reflexionsgitter ausgebildet ist, welches im Bereich der optischen Achse (A) im Strahlengang am optischen Trägerelement (11, 21) angeordnet ist.

8. Fernoptisches Gerät (1) nach Anspruch 7, **dadurch gekennzeichnet, dass** das kreisringförmige optische Koppelelement (13) als Zielmarke dient.

9. Fernoptisches Gerät (1) nach einem der Ansprüche 1 bis 8, **dadurch gekennzeichnet, dass** das optische Trägerelement (21) als Strahlteiler mit zwei Prismen (21', 21 ") ausgeführt ist, zwischen denen ein diffraktives optisches Koppelelement (23) zum Einkoppeln angeordnet ist.

10. Fernoptisches Gerät (1) nach Anspruch 9, **dadurch gekennzeichnet, dass** das diffraktive optische Koppelelement (23) ein Volumenhologramm ist, welches in eine ausgedehnte Polymerschicht zwischen die zwei Prismen (21', 21") eingebracht ist.

11. Fernoptisches Gerät (1) nach Anspruch 9, **dadurch gekennzeichnet, dass** das diffraktive optische Koppelelement (23) in eines der Prismen strukturiert und mit dem anderen Prisma verkittet ist.

12. Fernoptisches Gerät (1) nach einem der Ansprüche 9 bis 11, **dadurch gekennzeichnet, dass** das optische Koppelelement (23) im Strahlteiler vollflächig ausgebildet ist.

13. Fernoptisches Gerät (1) nach einem der Ansprüche 1 bis 12, **dadurch gekennzeichnet, dass** die wenigstens eine Empfangseinrichtung eine Avalanche-Photodiode (22) aufweist.

14. Fernoptisches Gerät (1) nach Anspruch 13, **dadurch gekennzeichnet, dass** das optische Koppelelement (23) im Strahlteiler eine Abbildungsfunktion enthält, die eine Fokussierung des abgelenkten Laserlichtes auf die Avalanche-Photodiode (22) bewirkt.

15. Fernoptisches Gerät (1) nach einem der Ansprüche 1 bis 14, **gekennzeichnet durch** eines der folgenden Merkmale:
- das fernoptische Gerät (1) ist als binokulares Fernglas mit zwei Beobachtungsstrahlengängen ausgebildet; oder
- das fernoptische Gerät (1) ist als Zielfernrohr mit einem Beobachtungsstrahlengang ausgebildet.
